# EUROPEAN PATENT APPLICATION

(11) **EP 4 046 712 A1**
(43) Date of publication of application: **24.08.2022**
(21) Application number: 21157615.2
(22) Date of filing: 17.02.2021
(51) Int. Cl.: B01J 47/022

(54) **ION EXCHANGE DEVICE AND METHOD**

(71) Applicant: Hitachi Energy Switzerland AG, 5400 Baden (CH)
(72) Inventor: HAHN, Robert, 245 62 Hjärup (SE); MEHMEDOVIC, Meho, 265 75 Hyllinge (SE); LANDÉN, Krister, 246 32 Löddeköpinge (SE)
(74) Representative: Valea AB

(57) **Abstract**

Ion exchange device (22) comprising a fluid inlet (16), a fluid outlet (18), a plurality of containers (10) each containing a column of ion exchange material (12) having a certain height (h₁ + h₂ + h₃...), and a fluid channel that is arranged to convey fluid from the fluid inlet (16) through the ion exchange material (12) and out of the fluid outlet (18). The plurality of containers (10) is arranged in a laterally adjacent manner, whereby the plurality of containers (10) occupies a height (H) that is less than a sum of the heights of the columns (∑h₁ + h₂ + h₃...) of ion exchange material (12) contained inside the plurality of containers (10).

## Description

### TECHNICAL FIELD

The present invention concerns an ion exchanger device and method for producing an ion exchanger device.

### BACKGROUND OF THE INVENTION

Ion exchange is a well-known purification, separation or extraction process in which dissolved anions and cations are removed from a solution by electrostatic sorption into ion exchange materials (most commonly into ion exchange resins) and replaced with equivalent amounts of other ions of the same charge. Ion exchange resin is usually placed into a container to form a packing column, and the solution flows through the packing column.

Since the ion exchange effect is reversible, used ion exchange resin can be regenerated, i.e. washed with an appropriate concentration of inorganic acid or alkali, and restored its original state and reused.

One of the problems encountered with ion exchange resins is resin fouling whereby an accumulation of resin foulants such as suspended solids, oils and greases, bacteria, algae, and organic substances can mean that an ion exchange system requires more cleaning and rinsing, and exhibits flow rate variations or a decrease in effluent quality and operating capacity.

Additionally, when oxidizing agents come into contact with ion exchange resins under certain conditions, they can damage the resins, or cause them to deform and compact over time. This can lead to capacity loss and inhibited performance since the flow of fluids through the resin bed may be obstructed, which can compromise the overall effectiveness of the ion exchange system and lead to inconsistent effluent quality due to channeling in the resin bed.

Furthermore, extremely high or low temperatures can adversely affect the effectiveness of ion exchange resins. Over time, thermal degradation alters the resin's molecular structure such that it is no longer able to bind with the functional groups of ions that are key to the ion exchange reaction, resulting in compromised operational performance and shorter product life.

A further problem is that ion exchange may be adversely affected if regenerant solutions are administered incorrectly. The outcome of resin regeneration often depends on may factors, such as the overall resin condition, regeneration process water quality, regenerant chemical concentration, flow rate, temperature, and contact time.

Additionally, channeling can occur when fluids pass through the resin unevenly, carving pathways that result in the uneven exhaustion of the resin, and the breakthrough (or "leakage") of untreated or only partly treated solution into the effluent stream. Channeling can be caused by incorrect flow rates and blockages by dissolved solids or damaged or compacted resin beads. Leakage can also be caused by incomplete regeneration of the ion exchanger bed, whereby ions remaining on the resin after regeneration can enter into solution during subsequent service cycles.

Furthermore, resin loss can occur when resin beads flow out of an ion exchange column. This can be caused by excessive backwashing and mechanical failures in underdrain screening or other resin retention equipment. Resin loss may also result from the fragmentation of resin beads due to exposure to high temperatures, chlorine, and/or osmotic shock, allowing the resin particles to pass through even intact retention screens. Resin loss and migration can reduce overall system capacity and efficiency.

### SUMMARY OF THE INVENTION

An object of the invention is to provide an improved ion exchange device.

This object is achieved by an ion exchange device comprising the features recited in claim 1. The ion exchange device according to the present invention namely comprises a fluid inlet, a fluid outlet, (whereby the fluid may be one or more liquids, one or more gases, or a mixture thereof), a plurality of containers each containing a column of ion exchange material, such as ion exchange resin, having a certain height, and a fluid channel that is arranged to convey fluid from the fluid inlet through the ion exchange material and out of the fluid outlet. The containers of the plurality of containers may be of the same height or of a plurality of different heights. The plurality of containers is arranged in a laterally adjacent manner and occupies a height that is less than a sum of the heights of the columns of ion exchange material contained inside the plurality of containers.

If one or more problems such as ion exchange material fouling, oxidation, thermal degradation, inadequate regeneration, channelling, leakage, ion exchange material loss or migration occur in one of the containers, the problem(s) will be confined to that container only. This means that a single container in which a problem is suspected or detected may simply be removed from the ion exchange device and replaced, which minimizes downtime compared to a system having a single column of ion exchange material in which a problem is suspected or detected.

Additionally, by dividing a column of ion exchange material into several sections and arranging the containers of ion exchange material in the manner described above, it is possible to achieve efficient ion exchange in a space efficient manner. Furthermore, the ion exchange device according to the present invention increases design possibilities for a user since the containers may be arranged, re-arranged, connected and re-connected in any suitable manner depending on the application in which the ion exchange device is used. The ion exchange device according to the present invention may consequently be quickly and simply optimized depending on the application in which it is used.

It should be noted that one or more of the plurality of containers of the ion exchange device described in this document need not necessarily be vertical when the ion exchange device is in use. Instead, one or more of the plurality of containers may be positioned horizontally or diagonally when the ion exchange device is in use. The word "height" is therefore also intended to mean "length" if a container of the plurality of containers or a column of ion exchange material is positioned horizontally. It should also be noted that one or more of the plurality of containers of the ion exchange device, and/or one or more columns of ion exchange material described in this document, need not necessarily have a linear extension, but may have an at least partly curved extension, or may be arranged to extend in any other way within the ion exchange device.

According to an embodiment of the invention a plurality of containers can comprise any number of containers, such as at least two, at least three, at least four, at least five, at least six, at least seven, at least eight, at least nine or at least 10 containers. One, or each container of the plurality of containers may be of any suitable size and geometry and all of the containers of a plurality of containers need not necessarily be of the same size, and shape. One or more containers of the plurality of containers may be cylindrical, rectagonal, polygonal, or of any other regular or non-regular shape.

The height, H of a container may be up to 20 cm, up to 30 cm, up to 40 cm, up to 50 cm, up to 100 cm, up to 110 cm, up to 120 cm, up to 130 cm, up to 140 cm, or up to 150 cm, whereby the height of ion exchange material in each container is measured from the bottom surface to the top surface of ion exchange material when the ion exchange device is ready to use. The height of a plurality of containers is measured from the lowermost point of the plurality of containers to the uppermost point of the plurality of containers when the ion exchange device is ready to use. The height and cross-sectional dimension (i.e. diameter or width) of each column of ion exchange material is selected so as achieve a certain flow of fluid therethrough and/or to achieve a desired detention time in the column to enable the diffusion of ions into the ion exchange material to take place.

The volume of a container may be up to 1 litre, up to 2 litres, up to 5 litres, up to 10 litres, up to 20 litres, up to 30 litres, up to 40 litres, or up to 50 litres. The containers of the plurality of containers of the ion exchange device according to the present invention are therefore smaller than conventional containers for ion exchange material, which can have a volume of up to 100 litres, and are therefore much easier to transport and service.

According to an embodiment of the invention at least two of the plurality of containers are sequentially connected in series along the fluid channel. Alternatively, or additionally at least two of the plurality of containers are connected in parallel. Each of the containers of the plurality of containers may however be sequentially connected in series along the fluid channel. Alternatively, each of the containers of the plurality of containers connected in parallel.

According to an embodiment of the invention each container of the plurality of containers has a longitudinal axis, and the plurality of containers is arranged so that the longitudinal axes are aligned in parallel.

According to an embodiment of the invention each container of the plurality of containers comprises a first end and a second end and at least one, or each, of the plurality of containers comprises a strainer located at the first end and/or at the second end of the container(s). The strainer may be any device for separating solid matter from a fluid, or any device for separating a particular type or size of solid from a fluid, such as a filter.

According to an embodiment of the invention the ion exchange device may comprise a filter arranged in a separate container that is connected in series in between two containers of said plurality of containers that are sequentially connected in series along the fluid channel. Alternatively, the ion exchange device may comprise a filter arranged in a separate container that is connected in series upstream of the first container or downstream of the final container of a plurality of containers sequentially connected in series along the fluid channel.

According to an embodiment of the invention at least two, or each, of the plurality of containers are constrained by a common support structure. The common support structure may be used to provide the necessary stiffness and strength in order to keep at least two containers of the plurality of containers in place or merely to facilitate an efficient packing of containers to reduce the space requirements.

According to an embodiment of the invention at least two containers of the plurality of containers are arranged in a module that is configured to be connected to at least one other such module. Each module preferably comprises a symmetrically placed fluid inlet port and a fluid outlet port. A plurality of modules may be releasably or non-releasably connected together to form an array of modules.

According to an embodiment of the invention each container of the plurality of containers is individually removable from the common support structure or module so that one or more containers may be removed or replaced as desired. Alternatively, a whole module may be arranged to be disposable so that a user can simply replace a used module with a new module when necessary.

It should be noted that two or more containers of the plurality of containers may be connected to each other, or to any other components, by any suitable mechanical or nonmechanical fastening means, such as via screws, bolts and/or adhesive, in addition to, or instead of being constrained by a common support structure or arranged in a module. According to an embodiment of the invention at least one of the following is integrated into the common support structure or a module: the fluid inlet, the fluid outlet, at least part of the fluid channel, a cavity for a sensor or measuring device, such as a conductivity meter, a strainer, a connection mechanism for releasably connecting a container of the plurality of containers to the support structure, connecting pipes, a releasable connection mechanism for connecting a container of the plurality of containers to the fluid channel and/or a cooling system, a heating system, or thermal insulation to ensure that the ion exchange material maintains its ion exchange capacity even after exposure to one or more high and/or low temperatures when the ion exchange device is in use.

According to an embodiment of the invention the common support structure is constituted by a block or an apertured sheet that is arranged to house at least two containers of the plurality of containers. The block or the apertured sheet may comprise polymeric material, such as plastic or reinforced plastic, which is optionally made by injection moulding or 3D-printing. According to an embodiment of the invention it comprises a plurality of the common support structures. A block may for example be subdivided into separate cavities for housing at least two containers of the plurality of containers and have a shape, such as a cube and/or flat surfaces so that two or more blocks can be stacked together closely in a space efficient manner. The size and geometry of the block may be selected so as to fit around one or more components of the system in which the ion exchange is being used.

According to an embodiment of the invention each container of the plurality of containers has a fluid inlet port and a fluid outlet port, and the fluid outlet port of an upstream container of the plurality of containers is arranged at substantially the same height as the fluid inlet-port of an adjacent downstream container of the plurality of containers, i.e. within 10% of the height of the downstream container. Such an arrangement means that the fluid pipes interconnecting an upstream container to an adjacent downstream container can be made as short as possible, which reduces space requirements.

According to an embodiment of the invention each container of the plurality of containers has a maximum cross-sectional dimension, such as a diameter or a width, and is located at a maximum distance from an adjacent container, whereby the maximum distance is equal to, or less than a maximum cross-sectional dimension of each of the two adjacent containers, or the largest of the two adjacent containers. Such an arrangement means that not only the height requirements of the ion exchange device, but also its width requirements may be reduced.

According to an embodiment of the invention the first end of each of the plurality of containers is a lower end and the second end of each container of the plurality of containers is an upper end, whereby the fluid channel is arranged to convey fluid to the first end of a first container of the plurality of containers and through the first container to the second end of the first container, and then directly to an adjacent second end of a second container and through the second container to the first end of the second container, whereby the fluid channel is arranged to convey fluid back and forth through the plurality of containers.

It should be noted that the term "lower end" is also intended to mean "left-hand side end" and the term "upper end" is also intended to mean "right-hand side end" if the containers of the plurality of containers are placed horizontally.

The present invention also concerns a method for producing an ion exchange device according to any of the embodiments of the present invention. The method comprises the following steps whereby the steps need not necessarily be carried out in the order presented below but can be carried out in any order, and two or more steps can be carried out at the same time:
- providing a plurality of containers of predetermined dimensions and geometry, each containing a column of the ion exchange material,
- arranging the plurality of containers in a laterally adjacent manner, whereby the height occupied by the plurality of containers is less than the sum of the heights of the columns of ion exchange material contained inside the plurality of containers and
- providing a fluid channel having a fluid inlet and a fluid outlet so as to convey fluid from the fluid inlet through each of the plurality of containers and out of the fluid outlet by connecting the plurality of containers from an upstream side to a downstream side of the fluid channel.

According to an embodiment of the invention the method also comprises at least one the following steps:
- connecting at least two or each of the plurality of containers sequentially in series along the fluid channel,
- connecting at least two or each of the plurality of containers in parallel,
- arranging the plurality of containers so that the longitudinal axes of the plurality of containers are aligned in parallel,
- arranging a strainer at a first end and/or at a second end of at least one container of the plurality of containers,
- arranging at least two, or each, of the plurality of containers so as to be constrained by a common support structure and/or in a module, preferably but not necessarily in an individually removable manner, whereby the common support structure or a module optionally comprises at least one of the following integrated therein: the fluid inlet, the fluid outlet, at least part of the fluid channel, a cavity for a sensor or measuring device, a strainer, a releasable connection mechanism for connecting a container of the plurality of containers to the support structure, connecting pipes, a releasable connection mechanism for connecting a container of the plurality of containers to the fluid channel, a cooling system, a heating system or thermal insulation,
- providing each container of the plurality of containers with a fluid inlet port and a fluid outlet port, and arranging the fluid outlet port of an upstream container of the plurality of containers at substantially the same height as the fluid inlet-port of an adjacent downstream container of the plurality of containers, i.e. within 10% of the height of the downstream container,
- locating each container of the plurality of containers at a maximum distance from an adjacent container, whereby the maximum distance is equal to, or less than a maximum cross-sectional dimension of the largest of the two adjacent containers,
- arranging the fluid channel to convey fluid to a first end of a first container of the plurality of containers, through the first container to a second end of the first container and then directly to an adjacent second end of a second container, through the second container to a first end of the second container, whereby the fluid channel is arranged to convey fluid back and forth through the plurality of containers, and whereby the first end of the plurality of containers is a lower end and the second end of each container of the plurality of containers is an upper end,
- arranging the plurality of containers to be constrained by at least one common support structure, such as a block or apertured sheet and/or in a module.

The present invention also concerns a fuel cell, a hydrogen production system, a battery cooling rack, an ozone generator, an accelerator, a converter, a High Voltage Direct Current (HVDC) power transmission system, or a Static Var Compensator (SVC) comprising at least one ion exchange device according to any of the embodiments of the invention.

The ion exchange device according to the present invention may however be used in any suitable application, such as water-treatment applications including water softening, industrial demineralization, condensate polishing, ultrapure water production, and wastewater treatment, in non-water separation processes, such as desiccation and chromatographic separation, in chemical synthesis, manufacturing, food processing, mining, power generation or agriculture.

### BRIEF DESCRIPTION OF THE DRAWINGS

The present invention will hereinafter be further explained by means of non-limiting examples with reference to the appended schematic figures where;
- Figure 1: shows a cross-sectional view of a container for containing ion exchange material of an ion exchange device according to an embodiment of the invention,
- Figure 2: shows a plurality of containers of an ion exchange device according to an embodiment of the invention,
- Figure 3: shows an ion exchange device according to an embodiment of the invention,
- Figure 4: shows a support structure of an ion exchange device according to an embodiment of the invention, and
- Figure 5: is a flow diagram showing the steps of a method according to the present invention.

It should be noted that the drawings have not necessarily been drawn to scale and that the dimensions of certain features may have been exaggerated for the sake of clarity.

### DETAILED DESCRIPTION OF EMBODIMENTS

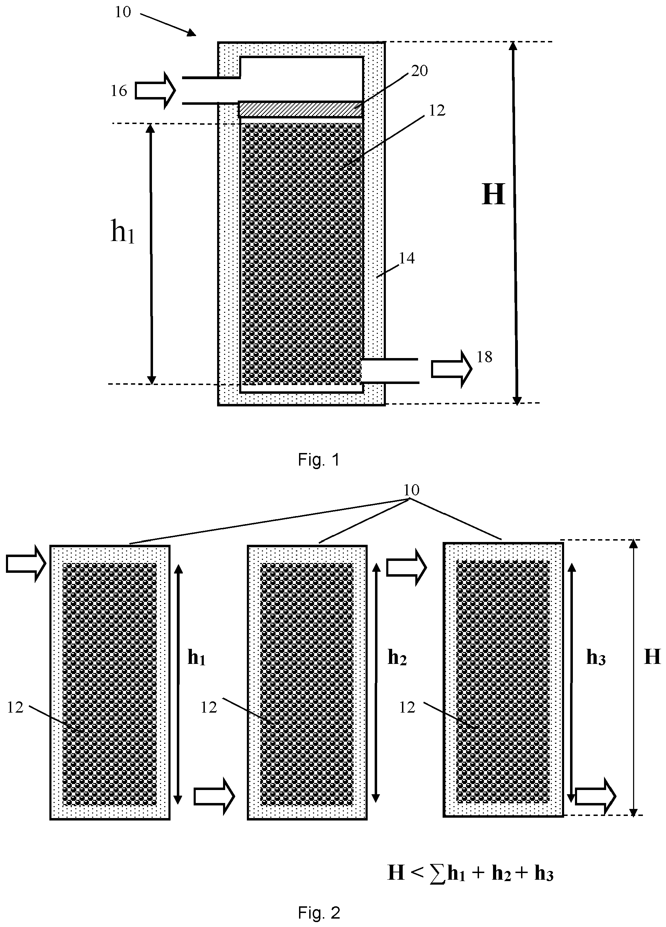

Figure 1 shows a cross-sectional view of a container 10 having a height, H, and containing ion exchange material 12. The container 10 includes a cartridge 14, a fluid inlet 16 and a fluid outlet 18. The ion exchange material 12, which forms a vertical column with a height, h₁ when the container 10 is in use, may for example be a cation or an anion exchange resin in bead form. For example, the ion exchange material 12 may be a nuclear-grade ion exchange resin that is replaced when depleted. In operation, fluid flows into the cartridge 14 by way of the fluid inlet 16 where it flows through the ion exchange material 12 and eventually exits the cartridge 14 at the fluid outlet 18. The ion exchange material 12 removes ions and/or other charged constituents from fluid that comes into contact with it.

It should be noted that the fluid inlet 16 and the fluid outlet 18 of an ion exchange device according to the present invention may be located in any suitable location such as anywhere a top, bottom or side surface of a container 10.

The container 10 shown in figure 1 comprises a strainer 20. A strainer 20 may be integrated into the cartridge 14 or container 10 or removably connected thereto. A strainer 20 located at the top of a container 10 may for example be arranged to be accessible via a lid at the top of the container 10.

A cartridge 14 and/or a container 12 may be made of, or comprise any suitable material, such as stainless steel or aluminium. The outer surface of a cartridge 14 and/or a container may comprise an insulating material to ensure that the ion exchange material 12 maintains its ion exchange capacity even if subjected to prolonged high or low operating temperatures or repeated heating/cooling cycles or freezing/thawing conditions when the ion exchange device is in use. Thermal cycling can namely create mechanical forces that can break up the ion exchange material 12 and result in an undesired pressure drop within the fluid channel.

Figure 2 shows a cross-sectional view of a plurality of containers 10, namely three containers 10. In the illustrated example all of the containers 10 are of the same height, H. A plurality of containers 10 can however comprise containers 10 containing a plurality of different heights. In the latter case, the height, H of the plurality of containers 10 will correspond to the highest container of that plurality of containers 10 if the containers 10 are all located on an even surface.

The plurality of containers 10 is arranged in a laterally adjacent manner, side by side in the illustrated example, and occupies a height, H that is less than the sum of the heights of the columns of ion exchange material 12, H < ∑h₁ + h₂ + h₃ contained inside the plurality of containers 10. If the height of a container is 30 cm and the height of a column of ion exchange material in each container is 25 cm, then the plurality of containers occupies a height of 30 cm, which is less than half of the sum of the heights of the columns of ion exchange material (∑h₁ + h₂+ h₃ = 25 + 25 + 25 = 75 cm) contained inside the plurality of containers 10.

According to an embodiment of the invention the height, H, occupied by a plurality of containers of an ion exchange device according to the present invention may be at least 10% less, at least 20% less, at least 25% less, at least 50% less, at least 75% less, at least 80% less or at least 90% less than the sum of the heights of the columns of ion exchange material contained inside the plurality of containers.

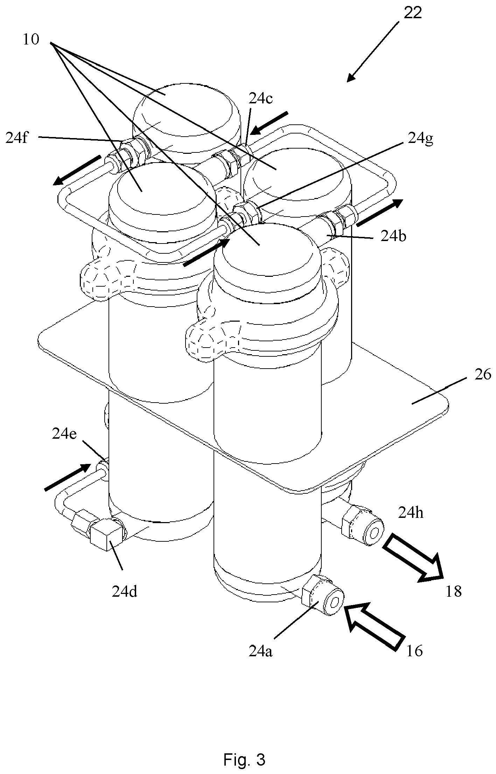

Figure 3 shows an ion exchange device 22 according to an embodiment of the invention that comprises four containers 10. The containers 10 are arranged so that their longitudinal axes are aligned in parallel. All four containers 10 are sequentially connected in series along a single fluid channel, whereby the sequence in which the four containers 10 may optionally be selected and/or changed by a user.

Fluid enters ion exchange device 22 via a fluid inlet 16, is conveyed through a fluid inlet port 24a at the lower end of a first container 10, and flows up through the ion exchange material 12 (not shown in figure 3) contained in the first container 10 to the upper end of the first container 10 and out of the fluid outlet port 24b. The fluid is then conveyed along the fluid channel to the fluid inlet-port 24c at the upper end of a second container 10, down through the ion exchange material 12 contained in the second container 10 to the lower end of the second container 10 and out of the fluid outlet port 24d. The fluid then flows through a third and fourth container in the same manner passing through the fluid inlet and outlet ports in the following order: 24e, 24f, 24g and 24h whereupon fluid is conveyed out of the ion exchange device 22 via fluid outlet 18. Fluid is thereby conveyed back and forth through the plurality of containers.

A user may decide to remove one or more of the containers 10, to replenish the ion exchange material 12 contained therein, or change the direction in which fluid flows through the system by re-arranging the fluid pipes between the fluid inlet ports (24a, 24c, 24e and 24g) and fluid outlet ports (24b, 24d, 24f and 24h). For example, two or more containers of a plurality of containers 10 may be connected in parallel if a user wants to increase the volume or flow of fluid through a particular ion exchange material 12 or through one or more particular containers 10 of the ion exchange device 22.

In the illustrated embodiment all of the fluid ports ports, 24a to 24h, are located either at the same height above the lower surface of a container 10, or at the same height below the upper surface of the container 10.

In the illustrated embodiment each container 10 has a maximum diameter or width, such as 10 cm and is located at a distance that is equal to or less than that maximum diameter or width from an adjacent container 10, i.e. there is a maximum distance of 10cm or less between adjacent containers 10, so that the ion exchange device 22 is as compact as possible both as regards its total height and total width.

In the illustrated embodiment the containers 10 are constrained by a common support structure 26 in the form of an apertured sheet and individually removable therefrom. The apertures in the sheet may be used to hold the containers in the correct position 10 during the use of the ion exchange device 22 and/or to store additional containers 10 that are not being used. A common support structure 26 may comprise any suitable material, such as a polymeric material, such as plastic or reinforced plastic.

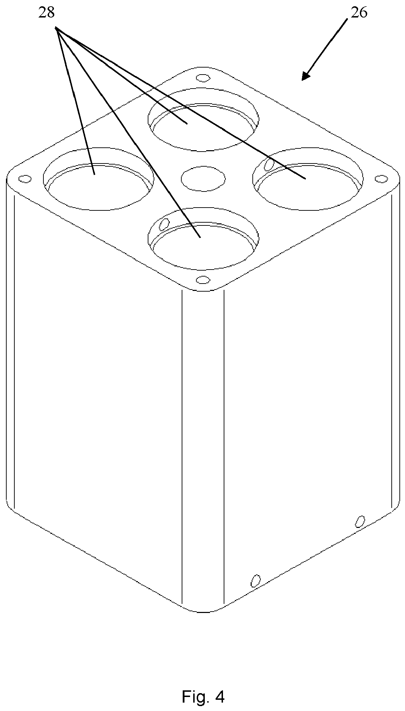

Figure 4 shows a common support structure 26 in the form of a block having a plurality of cavities 28 for housing a plurality of containers 10 of the ion exchange device 22. A common support structure 26 may be arranged to also comprise one or more of the following: a fluid inlet 16, a fluid outlet 18, at least part of a fluid channel conveying fluid through the ion exchange device 22, a cavity for a sensor or measuring device, , a strainer 20, a connection mechanism for releasably connecting a container 10 of the plurality of containers 10 to the support structure 26, connecting pipes for interconnecting two containers 10 for example, a releasable connection mechanism for connecting a container 10 of the plurality of containers 10 to the fluid channel, a cooling system, a heating system or thermal insulation. One or more of these features may be incorporated into a common support structure 26 during its manufacture, by injection moulding or 3D-printing for example.

A common support structure 26 may comprise a cavity to house a sensor or measuring device such as a conductivity meter to monitor the conductivity of fluid passing through a container 10 or fluid channel so that a user may determine when ion exchange material 12 in a particular container 10 has been depleted.

According to an embodiment of the invention an ion exchange device 22 may comprise a plurality of the common support structures 26. A plurality of containers 10 may thereby be divided into groups of containers 10 arranged in different support structures 26 and then stacked in one location in an space efficient manner, or positioned in different locations and interconnected so as to increase a user's design possibilities.

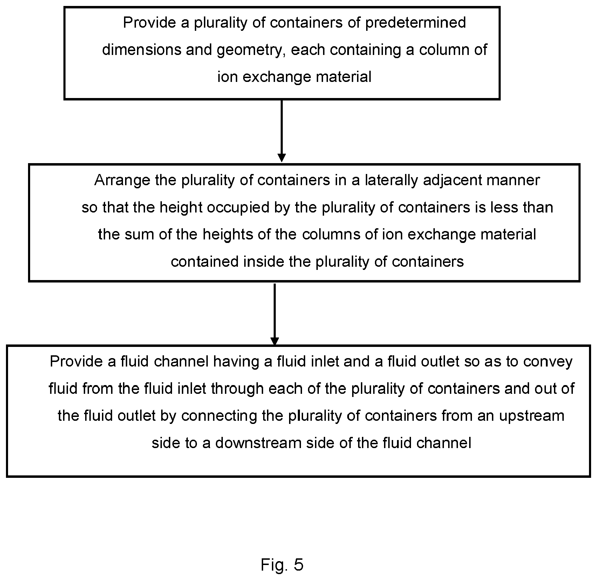

Figure 5 shows the essential steps of a method for producing an ion exchange device 22 according to the present invention. The method comprises the following steps which may be carried out in any order and several steps may be carried out at the same time:
- providing a plurality of containers 10 of predetermined dimensions and geometry, each containing a column of the ion exchange material 12,
- arranging the plurality of containers 10 in a laterally adjacent manner, whereby the height occupied by the plurality of containers (H) is less than the sum of the heights (∑h₁ + h₂ + h₃ ...) of the columns of ion exchange material 12 contained inside the plurality of containers 10, and
- providing a fluid channel having a fluid inlet 16 and a fluid outlet 18 so as to convey fluid from the fluid inlet 16 through each of the plurality of containers 10 and out of the fluid outlet 18 by connecting the plurality of containers 10 from an upstream side to a downstream side of the fluid channel.

Optionally, the method also comprises one or more of the other method steps disclosed herein, which may also be carried out in any order with respect to other method steps and/or at the same time as one or more other method steps.

An ion exchange device according to any of the embodiments of the invention may for example be used in a fuel cell system and in methods for treating the fluid of fuel cells. Fuel cells generate electricity through an electrochemical oxidation of a fuel, such as hydrogen, methanol, etc. Unreacted fuel and/or oxidant (exhaust) are often recycled and reintroduced into the fuel cell. Recycled constituents may be filtered using an ion exchange device to remove contaminates prior to being reintroduced into the fuel cell. Such contaminates include degradation and/or elution products of various system components, such as membrane, piping, coolant and/or catalysts, along with impurities that may be introduced with the fuel and oxidant.

Fuel cell systems often include coolant systems which circulate coolant fluid between a fuel cell and a heat exchanger. An ion exchange device according to the present invention may also be used in such coolant systems to remove debris and elution products from the recirculation coolant.

Further modifications of the invention within the scope of the claims would be apparent to a skilled person.

## Claims

1. Ion exchange device (22) comprising a fluid inlet (16), a fluid outlet (18), a plurality of containers (10) each containing a column of ion exchange material (12) having a certain height (h₁ + h₂+ h₃...), and a fluid channel that is arranged to convey fluid from said fluid inlet (16) through said ion exchange material (12) and out of said fluid outlet (18), **characterized in that** said plurality of containers (10) is arranged in a laterally adjacent manner, whereby said plurality of containers (10) occupies a height (H) that is less than a sum of the heights of said columns (∑h₁ + h₂ + h₃...) of ion exchange material (12) contained inside said plurality of containers (10).

2. Ion exchange device (22) according to claim 1, **characterized in that** at least two of said plurality of containers (10) are sequentially connected in series along said fluid channel or at least two of said plurality of containers (10) are connected in parallel.

3. Ion exchange device (22) according to claim 1, **characterized in that** each of said plurality of containers (10) is sequentially connected in series along said fluid channel or each of said plurality of containers (10) is connected in parallel.

4. Ion exchange device (22) according to any of claims 1-3, **characterized in that** each container (10) of said plurality of containers (10) has a longitudinal axis, and said plurality of containers (10) is arranged so that said longitudinal axes are aligned in parallel.

5. Ion exchange device (22) according to any of the preceding claims, **characterized in that** each container (10) of said plurality of containers (10) comprises a first end and a second end and at least one, or each, of said plurality of containers (10) comprises a strainer (20) located at said first end and/or at said second end of said container (10)(s).

6. Ion exchange device (22) according to any of the preceding claims, **characterized in that** at least two, or each, of said plurality of containers (10) are constrained by a common support structure (26) and/or arranged in a module that is configured to be connected to at least one other such module.

7. Ion exchange device (22) according to claim 6, **characterized in that** each container (10) of said plurality of containers (10) is individually removable from said common support structure (26) or said module.

8. Ion exchange device (22) according to claim 6 or 7, **characterized in that** at least one of the following is integrated into said common support structure (26) or said module:
said fluid inlet (16), said fluid outlet (18), at least part of said fluid channel, a cavity for a sensor or measuring device, a strainer (20), a connection mechanism for releasably connecting a container (10) of said plurality of containers (10) to said support structure, connecting pipes, a releasable connection mechanism for connecting a container (10) of said plurality of containers (10) to said fluid channel, a cooling system, a heating system or thermal insulation.

9. Ion exchange device (22) according to any of claims 6-8, **characterized in that** said common support structure (26) is constituted by a block or an apertured sheet that is arranged to house at least two containers (10) of said plurality of containers (10) whereby said block or said apertured sheet optionally comprises polymeric material, such as plastic, which is optionally made by injection moulding or 3D-printing.

10. Ion exchange device (22) according to any of claims 6-9, **characterized in that** it comprises a plurality of said common support structures (26) and/or a plurality of modules.

11. Ion exchange device (22) according to any of the preceding claims, **characterized in that** each container (10) of said plurality of containers (10) has a fluid inlet port (24a, 24c, 24e and 24g) and a fluid outlet port (24b, 24d, 24f and 24h), and the fluid outlet port (24b, 24d, 24f and 24h) of an upstream container (10) of the plurality of containers (10) is arranged at substantially the same height as the fluid inlet port (24a, 24c, 24e and 24g) of an adjacent downstream container (10) of said plurality of containers (10), i.e. within 10% of the height of the downstream container (10).

12. Ion exchange device (22) according to any of the preceding claims, **characterized in that** each container (10) of said plurality of containers (10) has a maximum cross-sectional dimension, and is located at a maximum distance from an adjacent container (10), whereby said maximum distance is equal to, or less than a maximum cross-sectional dimension of each of said two adjacent containers (10) or the largest of said two adjacent containers (10).

13. Ion exchange device (22) according to any of claims 5-12, **characterized in that** said first end of each of said plurality of containers (10) is a lower end and said second end of each container (10) of said plurality of containers (10) is an upper end, whereby said fluid channel is arranged to convey fluid to the first end of a first container (10) of said plurality of containers (10) and through said first container (10) to the second end of said first container (10), and then directly to an adjacent second end of a second container (10) and through said second container (10) to the first end of said second container (10), whereby said fluid channel is arranged to convey fluid back and forth through said plurality of containers (10).

14. Method for producing an ion exchange device (22) comprising a fluid inlet (16), a fluid outlet (18), a plurality of containers (10) each containing a column of ion exchange material (12) of a certain height (h₁ + h₂+ h₃ ...), and a fluid channel that is arranged to convey fluid from said fluid inlet (16) through said ion exchange material (12) and out of said fluid outlet (18), **characterized in that** the method comprises the steps of:
• providing a plurality of containers (10) of predetermined dimensions and geometry, each containing a column of said ion exchange material (12),
• arranging said plurality of containers (10) in a laterally adjacent manner, whereby the height (H) occupied by said plurality of containers (10) is less than the sum of the heights of said columns (∑h₁ + h₂ + h₃ ...) of ion exchange material (12) contained inside said plurality of containers (10), and
• and providing a fluid channel having a fluid inlet (16) and a fluid outlet (18) so as to convey fluid from said fluid inlet (16) through each of said plurality of containers (10) and out of said fluid outlet (18) by connecting said plurality of containers (10) from an upstream side to a downstream side of said fluid channel.

15. Method according to claim 13, **characterized in that** it also comprises at least one the following steps:
- connecting at least two or each of said plurality of containers (10) sequentially in series along said fluid channel,
- connecting at least two or each of said plurality of containers (10) in parallel,
- arranging said plurality of containers (10) so that the longitudinal axes of said plurality of containers (10) are aligned in parallel,
- arranging a strainer (20) at a first end and/or at a second end of at least one container (10) of said plurality of containers (10),
- arranging at least two, or each, of said plurality of containers (10) so as to be constrained by a common support structure (26) and/or in a module that is configured to be connected to at least one other such module, preferably in an individually removable manner, whereby the common support structure (26) or module optionally comprises at least one of the following integrated therein: said fluid inlet (16), said fluid outlet (18), at least part of said fluid channel, a cavity for a sensor or measuring device, a strainer (20), a releasable connection mechanism for connecting a container (10) of said plurality of containers (10) to said support structure, connecting pipes, a releasable connection mechanism for connecting a container (10) of said plurality of containers (10) to said fluid channel, a cooling system, a heating system or thermal insulation,
- providing each container (10) of said plurality of containers (10) with a fluid inlet port (24a, 24c, 24e and 24g) and a fluid outlet port (24b, 24d, 24f and 24h), and arranging the fluid outlet port (24b, 24d, 24f and 24h) of an upstream container (10) of the plurality of containers (10) at substantially the same height as the fluid inlet (16)-port of an adjacent downstream container (10) of said plurality of containers (10), i.e. within 10% of the height of the downstream container (10),
- locating each container (10) of said plurality of containers (10) at a maximum distance from an adjacent container (10), whereby said maximum distance is equal to, or less than a maximum cross-sectional dimension of the largest of said two adjacent containers (10),
- arranging said fluid channel to convey fluid to a first end of a first container (10) of said plurality of containers (10), through said first container (10) to a second end of said first container (10) and then directly to an adjacent second end of a second container (10), through said second container (10) to a first end of said second container (10), whereby said fluid channel is arranged to convey fluid back and forth through said plurality of containers (10), and whereby said first end of said plurality of containers (10) is a lower end and said second end of each container (10) of said plurality of containers (10) is an upper end,
- arranging said plurality of containers (10) to be constrained by at least one common support structures (26), such as a block or apertured sheet and/or in a module.
